(19)

Europäisches
Patentamt
European
Patent Office
Office européen
des brevets

(11) **EP 2 169 785 A1**

(12) **EUROPEAN PATENT APPLICATION**

(43) Date of publication:
**31.03.2010 Bulletin 2010/13**

(51) Int Cl.:
***H01S 3/067*** (2006.01)   ***H01S 3/11*** (2006.01)

(21) Application number: **09012100.5**

(22) Date of filing: **23.09.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK SM TR**<br>Designated Extension States:<br>**AL BA RS**<br><br>(30) Priority: **25.09.2008 US 99978 P**<br>**19.05.2009 US 454507** | (71) Applicant: **OFS Fitel, LLC**<br>**Norcross GA 30071 (US)**<br><br>(72) Inventor: **Nicholson, Jeffrey W.**<br>**Morristown, NJ 07960 (US)**<br><br>(74) Representative: **Zimmermann, Tankred Klaus et al**<br>**Schoppe, Zimmermann, Stöckeler & Zinkler**<br>**Patentanwälte**<br>**Postfach 246**<br>**82043 Pullach bei München (DE)** |

(54) **Passively modelocked fiber laser using carbon nanotubes**

(57)   A passively modelocked fiber laser (10) utilizes a rare-earth-doped fiber section (12) as the gain medium, which exhibits a relatively high absorption (e.g., peak pump absorption > 50 dB/m) and relatively low dispersion (e.g., -20 ps/km-nm < $D_g$ < 0). Passive modelocking is provided by a single-walled carbon nanotube (SWNT) saturable absorber (30,80), formed on endface portions of a section of un-doped fiber. The remaining components (input/output couplers (16,24), isolator (20)) are preferably integrated into a single component (76) and coupled to the un-doped optical fiber (78). This combination yields a laser cavity with a slightly anomalous overall dispersion, preferred for soliton generation and creating optical pulses with a sub-picosecond pulse width and repetition frequency over 100 MHz.

FIG. 1

EP 2 169 785 A1

## Description

### Cross Reference to Related Application

This application claims the benefit of US Provisional Application No. 61/099,978, filed September 25, 2008, which is herein incorporated by reference.

### Technical Field

The present invention relates to a passively modelocked fiber laser and, more particularly, to a fiber laser employing a fiber-integrated carbon nanotube saturable absorber to create a short pulse width, high repetition frequency fiber laser.

### Background of the Invention

Passively modelocked fiber lasers have been found to be reliable sources of ultrashort pulses (e.g., pulses of widths less than a picosecond). In addition to the ultrashort pulse width, lasers with high pulse repetition frequency (e.g., hundreds of MHz) find use in applications such as frequency metrology and high speed optical sampling. To be practical, these sources must be compact, reliable and require minimal power consumption. Modelocked Er-doped fiber lasers provide potentially attractive short pulse sources possessing some key advantages over modulated continuous-wave (CW) sources, advantages such as large optical bandwidth, high intensities and powers, short coherence length and substantial timing stability.

One difficulty presented by high repetition frequency requirements is the need for an extremely short cavity length. However, short cavity lengths do not allow for dispersion compensation to be performed and, as a result, the generated pulse width is relatively long (on the order of picoseconds). Thus, a natural tension exists between achieving relatively high pulse repetition frequency (100 MHz or higher) and ultrashort pulse width (on the order of less than a picosecond).

For high repetition frequency lasers, a unidirectional ring cavity has the advantage that the fundamental pulse repetition frequency is twice that of a linear cavity for the same fiber length. One example includes a fiber ring laser capable of achieving 200 MHz repetition frequencies. However, this laser relies on fiber nonlinearity to generate passive modelocking, and the lower pulse energies of high repetition frequency lasers makes the ability to scale such lasers to higher frequencies difficult, if not impossible.

In general, management of the overall dispersion exhibited by a fiber laser cavity will allow for the generated pulse width to be compressed to some degree. Erbium-doped fiber (used as the gain medium in fiber lasers) exhibits a conventional, normal dispersion (e.g., -17 ps/nm-km for erbium-doped fiber at a wavelength of 1550 nm), while a standard single mode fiber, used to form the remainder of the laser cavity, has an anomalous dispersion characteristic (e.g., +17 ps/nm-km) at this same wavelength. These dispersion values are exemplary only. Indeed, when using ytterbium (Yb) as the gain fiber dopant, amplification occurs within the wavelength range of 1030 - 1100 nm and both the gain fiber and single mode fiber exhibit normal (negative) dispersion. Other components/fibers exhibiting positive dispersion are then required to create anomalous dispersion. In any case, the relative lengths of the various fibers forming the laser cavity are determined by balancing the requirements of "short" overall cavity length (for high pulse repetition frequency) and "long" cavity length (for dispersion management and/or lasing bandwidth).

Passively modelocked fiber lasers based on fast saturable absorbers can, in principle, be built with higher repetition frequencies. However, pulse widths for lasers based on such a modelocking mechanism are not capable of generating pulse widths in the 100 fs regime.

It remains desirable to provide a passively modelocked fiber laser which is capable of generating optical output pulses with a sub-picosecond pulse width and a repetition frequency of at least 100 MHz.

### Summary of the Invention

The needs remaining in the prior art are addressed by the present invention, which relates to a passively modelocked fiber laser and, more particularly, to a fiber laser employing a fiber-integrated carbon nanotube saturable absorber to create a short pulse width, high repetition frequency fiber laser.

In accordance with the present invention, the ability to create repetition frequencies of approximately 100 MHz or higher, while maintaining sub-picosecond pulse widths, has been obtained by: (1) utilizing a fiber-based saturable absorber that operates in the transmission mode, which allows for a ring cavity design and (2) managing cavity dispersion through control of the lengths of the gain fiber and remaining cavity fiber. Additionally, by integrating a number of other required components (isolator, couplers) into a monolithic unit, the total length of inter-component connections is reduced, thereby further reducing the cavity length and increasing the repetition frequency without adversely impacting the pulse width.

In one embodiment, a fiber laser of the present invention utilizes a rare-earth-doped fiber section as a gain medium, such as an erbium-doped fiber section that exhibits a relatively high pump absorption, for example, peak absorption greater than approximately 50 dB/m, and relatively low dispersion, for example, a dispersion of the gain fiber greater than approximately -20 ps/nm-km, but less than 0 at the lasing wavelength range of interest. Ytterbium (Yb) is another suitable rare earth dopant. A saturable absorber of the fiber laser is formed as a single-walled carbon nanotube (SWNT) configuration that is preferably disposed on an endface portion of a section of un-doped fiber connected to an endface of the rare-earth doped fiber. Alternatively, the SWNT configuration can be disposed at an endface of the rare-earth doped fiber. Other fiber laser components, such as input/output couplers and an isolator can be preferably integrated into a single component and coupled to the un-doped fiber. This combination yields a laser cavity with a slightly anomalous overall dispersion, in the range of approximately +1 to approximately +10 ps/nm-km, preferred for soliton generation and creating pulses of sub-picosecond width at the high repetition frequencies.

Advantageously, the use of a fiber-integrated SWNT absorber eliminates the need for discrete components, including bulk optic lenses for coupling into and out of optical fibers, to be incorporated within the laser structure, which decreases the possibilities of coupling losses and reflections and, importantly, allows for the laser cavity length to be significantly reduced and thereby achieve sub-picosecond pulse widths. Furthermore, the SWNT absorber readily operates in transmission (as compared to reflection), making it compatible with a ring cavity design - which is preferred for high repetition frequency applications. However, embodiments of the present invention may also be formed as a linear cavity laser.

Other embodiments and advantages of the present invention will become apparent during the course of the following discussion and by reference to the accompanying drawings.

### Brief Description of the Drawings

Referring now to the drawings,

FIG. 1 is a diagram of an exemplary fiber ring laser formed in accordance with the present invention;

FIG. 2 plots the modelocked spectrum for three different embodiments of the laser of FIG. 1, each embodiment having a different length of single mode fiber (and, therefore, a different overall cavity dispersion value and repetition frequency);

FIG. 3 shows the autocorrelation of a 124 fs pulse output from the fiber ring laser of the present invention, at a 200 MHz repetition frequency;

FIG. 4 illustrates an alternative embodiment of the present invention, in this case using a multi-component device to perform the coupling and isolation functions and thus reducing the number of discrete fiber components and allowing the laser cavity to be shortened even further;

FIG. 5 plots the modelocked spectrum for three different embodiments of the laser of FIG. 4, each embodiment having a different length of single mode fiber or doped gain fiber (and, therefore, a different overall cavity dispersion value and repetition frequency);

FIG. 6 is a graph of the pulse train associated with a repetition frequency of 415 MHz, indicating single pulse generation;

FIG. 7 illustrates the measured autocorrelation pulse (270 fs) when the laser was operated at a repetition frequency of 447 MHz;

FIG. 8 is a diagram of yet another embodiment of the present invention, in this case comprising polarization maintaining fiber;

FIG. 9 is a diagram illustrating the various ranges in the performance which may be obtained by using different lengths of erbium-doped fiber and single mode fiber, with desired performance indicated by the unshaded region in the diagram;

FIG. 10 contains another embodiment of the present invention, using ytterbium-doped fiber as the gain medium and also including a separate, fiber-based dispersion compensation element; and

FIG. 11 illustrates a fiber laser of the present invention configured as a linear cavity laser structure.

### Detailed Description

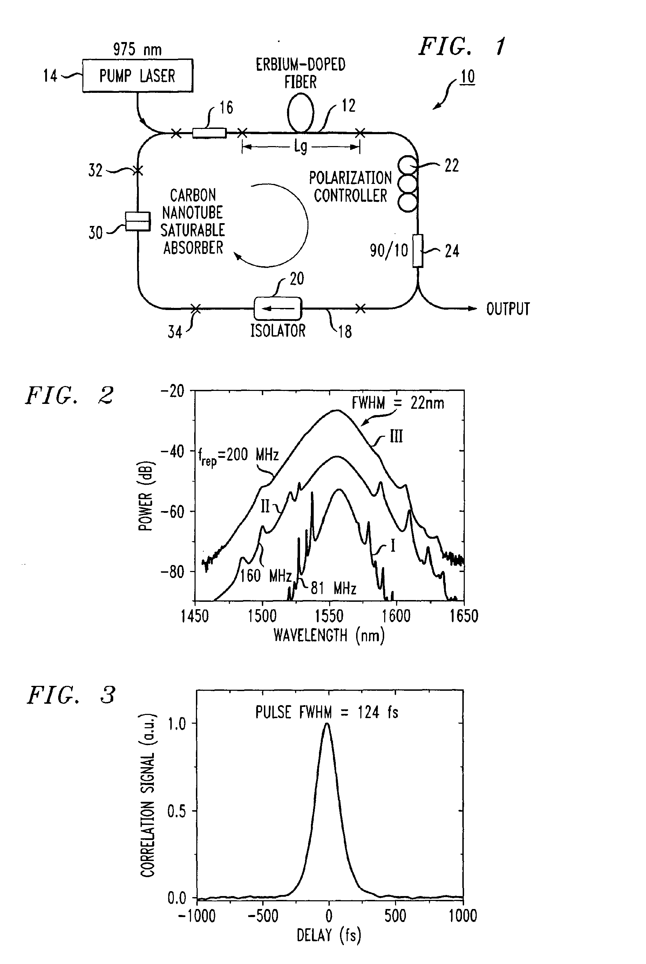

FIG. 1 illustrates an exemplary high repetition, ultrashort pulsewidth fiber ring laser 10 formed in accordance with the present invention. Fiber ring laser 10 includes a section of rare-earth-doped fiber 12, which is used as the amplifying element (also referred to as the "gain medium" or "gain fiber" within this document) of the laser structure. Gain fiber 12 is doped to exhibit a peak pump signal absorption greater than 50 dB/m, with values of 80 dB/m, 150 dB/m, or even higher being desired to minimize the fiber length required to achieve acceptable amplification.

A source of input pump light, shown as pump laser 14, is coupled into gain fiber 12 through a wavelength division multiplexer (WDM) 16. Pump laser 14 provides the input optical pump signal at a wavelength suitable for generating amplification within gain fiber 12. The remainder of fiber ring laser 10 comprises various sections of un-doped optical fiber 18 utilized to provide signal path connections into and out of the remaining components. In one embodiment, optical fiber 18 may comprise single mode fiber, although other types of fiber may be utilized. In this particular embodiment, fibers 12 and 18 are joined in a ring configuration, as shown, to form a circular laser cavity.

An isolator 20 is disposed along laser 10 to prevent reflected signals from counter-propagating and, perhaps, entering pump source 14 and creating instability in the laser cavity. Isolator 20 preferably comprises an in-line (i.e., fiber-based) isolator configuration. A polarization controller 22 may be used in conjunction with fiber ring laser 10 to optimize the generated spectral bandwidth by preventing polarization rotation during signal propagation. An output coupler 24, such as a 10% optical tap, is used to remove a portion of the circulating signal as the output pulse train of fiber ring laser 10. Other values of output couplers may be used; for example, a 5% optical tap can be used.

In accordance with the present invention, passive modelocking is achieved by incorporating a fiber-based single-walled carbon nanotube (SWNT) absorber 30 into the laser cavity. In the particular embodiment of FIG. 1, SWNT absorber 30 is formed by depositing single-walled carbon nanotubes onto an endface of a section of an angled fiber connector, creating a fiber integrated SWNT absorber 30 in a configuration which can be readily connected into the laser cavity of ring laser 10. In the particular embodiment of FIG. 1, SWNT absorber 30 is formed between sections of optical fiber 18. The connection of SWNT absorber 30 to laser 10 is shown by splice points 32 and 34. Alternatively, a SWNT absorber 30 may be formed at a termination of gain fiber 12. An exemplary method of creating a fiber-based SWNT absorber is described in my copending application "Selective Deposition of Carbon Nanotubes on Optical Fibers", filed October 27, 2006, incorporated herein by reference in its entirety. Other methods of manufacturing fiber-based carbon nanotube saturable absorbers have been demonstrated, such as embedding SWNTs in thin polymer films or on the outside of fiber tapers. It is to be understood that any suitable method may be used to create the fiber-based SWNT absorber as used in the arrangement of the present invention.

Referring to FIG. 1, absorber 30 is shown as including a pair of fusion splice terminations 32 and 34. Importantly, the ability to form SWNT absorber 30 as a fiber-integrated component eliminates the need to use a discrete saturable absorber in the fiber ring laser. Inasmuch as discrete devices are known to introduce reflections and loss into a laser structure, the elimination of these devices increases the achievable repetition frequency and minimal pulse width desired for many applications.

As known in the art, many erbium-doped fiber designs can be configured to exhibit normal dispersion (e.g., a value of approximately -17 ps/nm-km at 1550 nm), while SMF exhibits anomalous dispersion (approximately +17 ps/nm-km) at this same wavelength. Thus, the lengths of these fibers are controlled in accordance with the present invention to provide the desired amount of dispersion (i.e., "dispersion management"). In particular, the total physical length of optical fiber 18 is dictated by the number of connections used to couple together the various elements (e.g., isolator, couplers). The cross-hatch marks in FIG. 1 illustrate locations of connections between different elements; inasmuch as a minimal length of fiber is required to create each fiber connection (on the order of approximately 4-5 cm), the need for multiple connections results in requiring a relatively long total physical length of optical fiber 18 (about one meter), which is counter to the desired objective to create a relatively short cavity length. Additionally, the length of gain fiber 12 cannot be less than that required to create the lasing output in the first place and must also be long enough to ensure that the lasing occurs on a broad gain peak (i.e., 1550 nm), and not a narrow gain peak (i.e., 1530 nm). The narrower gain peak at 1530 nm, as discussed below, is not preferred since it results in a narrower modelocked spectrum and, consequently, a wider pulse width.

FIG. 2 illustrates the modelocked spectrum associated with fiber ring laser 10 of FIG. 1, for three separate configurations using different lengths of un-doped optical fiber 18. In performing these measurements, erbium-doped fiber was used as gain fiber 12, and was selected to have a length of 25 cm. Additionally, pump laser 14 was configured to present pulses at a wavelength of 975 nm to erbium-doped gain fiber 12. The erbium fiber had a peak pump absorption of approximately 55 dB/m and a dispersion of -17 ps/nm-km (both values measured at a wavelength of 1550 nm). Curve I is associated with an exemplary fiber ring laser 10 having the longest length of optical fiber 18. In particular, using a 25 cm length of gain fiber 12 and 2.3 m of single mode fiber as optical fiber 18, the laser of this configuration operated with a repetition frequency of 81 MHz. By decreasing the length of single mode fiber used as optical fiber 18, a repetition frequency of 160 MHz was achieved, shown as curve II in FIG. 2. The maximum measured spectral FWHM of 22 nm was associated with a repetition frequency of 200 MHz, shown as curve III. In this case, the length of single mode optical fiber 18 was 78 cm. In light of the dispersion values exhibited by the gain fiber and the single mode fiber, as the amount of single mode fiber is reduced, the net anomalous dispersion also decreases. FIG. 3 illustrates the autocorrelation of a pulse associated with curve III of FIG. 2, showing a pulse width of 124 fs, with a time-bandwidth product of 0.34.

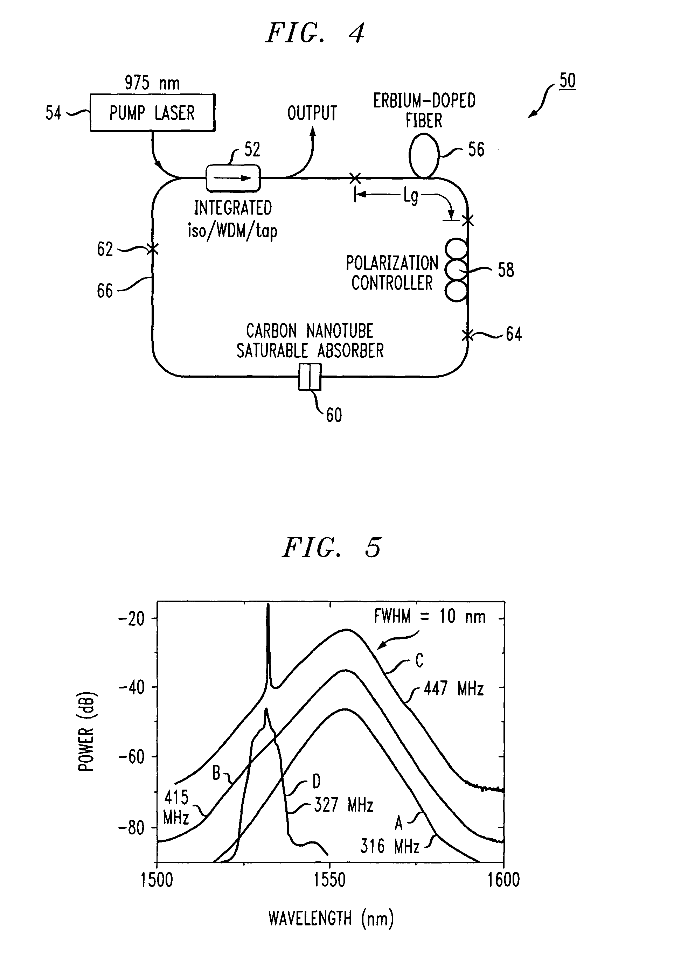

The ability to further simplify the configuration and reduce the cavity length of the inventive fiber laser has led to achieving even higher repetition frequencies. FIG. 4 illustrates an exemplary fiber ring laser 50 formed in accordance with the present invention which has been able to achieve repetition frequencies in excess of 400 MHz, while retaining sub-picosecond pulse width values. In the arrangement of FIG. 4, the functions of optical isolation, input coupling and output coupling (previously provided by components 20, 16 and 24, respectively, in the embodiment of FIG. 1) have been combined into an available multi-functional off-the-shelf component 52 able to perform all of these functions. The use of a single, multi-functional component 52 significantly reduces the number of required fiber connections and further aids in achieving the shortest possible cavity length.

Similar to the arrangement of FIG. 1, a pump source 54 provides the optical input signal to laser 50, in this case through multi-functional component 52. The signal thereafter passes through a section of gain fiber 56, a polarization controller 58 and SWNT absorber 60. As before, SWNT absorber 60 is formed by depositing single-wall carbon nanotubes onto opposing endfaces of sections of optical fiber 18, thereafter joined together to form a fiber integrated component. SWNT absorber 60 is spliced in place within the fiber cavity by connections 62 and 64, as shown in FIG. 4.

In one configuration of the embodiment of FIG.

4, a length of erbium-doped fiber was used as gain fiber 56, with an initial length of 20 cm, the remainder of the cavity formed of un-doped optical fiber 66. FIG. 5 contains a plot of the modelocked spectrum generated by fiber ring laser 50. The separate traces shown in FIG. 5 are associated with the use of different lengths of gain fiber 56 or optical fiber 66 within the laser cavity. The longest length of optical fiber 66 in this experiment, shown as curve A in FIG. 5, was shown to generate a pulse repetition frequency of 316 MHz, a significant advance over the 200 MHz level associated with the use of multiple components (such as the arrangement of FIG. 1).

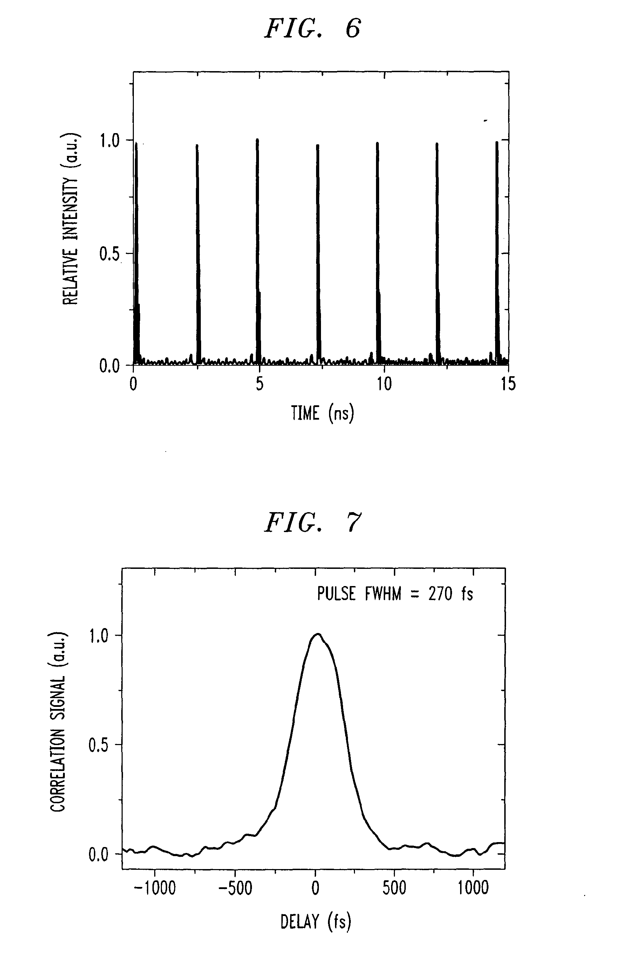

To increase the repetition frequency from 316 MHz to 415 MHz, the cavity length was shortened by removing a portion of optical fiber 66. Curve B in FIG. 5 illustrates the modelocked spectrum for the 415 MHz repetition frequency. Single pulse operation at this repetition frequency is confirmed by the generated pulse train as show in FIG. 6.

Dispersion management and, in turn, maintenance of a sub-picosecond pulse width, essentially eliminates the possibility of removing any additional portion of optical fiber 66 from this laser structure. Therefore, to further increase the repetition frequency from 415 to 447 MHz, a section of erbium-doped fiber 56 having a length of about 2 cm was removed. The modelocked spectrum for this configuration is shown as curve C in FIG. 5, which also shows a maximum FWHM value of 10 nm for this repetition frequency. FIG. 7 illustrates the measured pulse autocorrelation for this repetition frequency, which indicates a pulse width on the order of 270 fs.

By reducing the length of gain fiber 56, however, the 1530 nm peak in the erbium fiber will begin to lase, shown as the spike in curve C of FIG. 5. Indeed, as shown in curve D, the removal of an additional 2 cm of gain fiber 56 resulted in the modelocked spectrum being centered at 1530 nm (the unwanted, narrower, spectrum). Any further reductions in the length of gain fiber 56, therefore, is inadvisable, inasmuch as an increasing portion of the available output energy will reside at this lower, unused wavelength and limit the generation of ultrashort pulses. To further shorten the cavity length, therefore, it is suggested to use erbium fibers with higher dopant concentrations than those used in current commercial products. Indeed, higher dopant concentrations which yield peak pump absorption values of 80 dB/m, 150 dB/m or higher will allow for substantially shorter cavity lengths to be used and create repetition frequencies well in excess of 400 MHz (while retaining output pulses having sub-picosecond pulse widths).

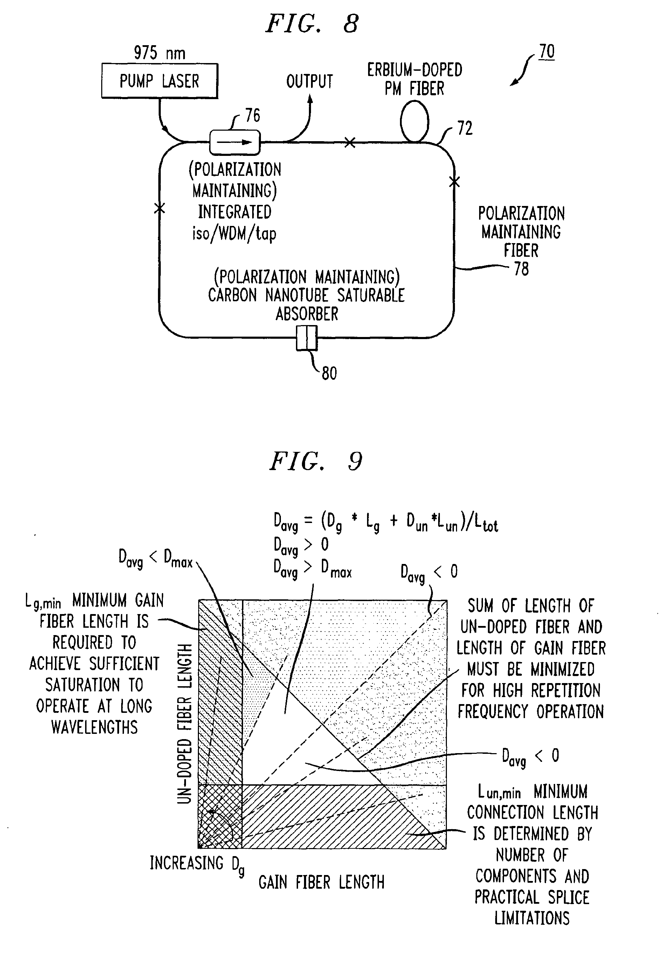

FIG. 8 illustrates yet another embodiment of the present invention, in this case using polarization-maintaining fiber to form the laser cavity. Indeed, this embodiment may be desirable in applications where there are space limitations and the addition of the external polarization controller (as shown in the embodiments of FIGs. 1 and 4) would be problematic. Referring to FIG. 8, a polarization-maintaining fiber ring laser 70 is shown as comprising a section of erbium-doped polarization maintaining fiber 72 for providing amplification of a pump signal from a pump laser source 74.

A multi-component element 76 (also polarization maintaining) is used to couple the pump signal into fiber ring laser 70, provide isolation and out-couple the create pulses. A section of polarization maintaining optical fiber 78 is used to complete the ring configuration, with a SWNT absorber 80 formed therealong in the manner described above. In particular, absorber 80 is formed by depositing SWNTs on polarization maintaining optical fiber connectors, thus forming a polarization maintaining absorber. The dispersion characteristics of the polarization maintaining fiber are similar to the conventional fibers discussed above, where the lengths of the various sections are controlled to create the desired slightly anomalous net dispersion value.

Further decreasing the length of an erbium-doped fiber has been found to reduce the oscillation to 1530 nm - an undesirable outcome. Shorter lengths of un-doped optical fiber also cannot be used, since the dispersion balance of the laser cavity will be adversely impacted. At a repetition frequency of 450 MHz, the combination of 20 cm of erbium-doped fiber and 26 cm of un-doped optical fiber yields an overall cavity dispersion of approximately +2.2 ps/nm-km.

These considerations on fiber length are summarized schematically in FIG. 9, which plots the lengths of both the erbium-doped fiber and un-doped fiber as used in the ring laser structure of the present invention. Shaded regions indicate undesirable areas of operation. A minimum length of undoped optical fiber (denoted as $L_{un,min}$) is defined as that which is required to form the necessary components of saturable absorber, polarization controller, isolator and couplers. A minimum length of erbium-doped fiber (denoted as $L_{g,min}$) is defined as that which is required to achieve sufficient saturation for lasing at long wavelengths. The total sum of the un-doped and erbium-doped fiber lengths should also be minimized to achieve the highest possible repetition frequency.

Another constraint is that the dispersion of the erbium-doped fiber should be such that the slope of the line defined by the desired operating average cavity dispersion falls within the shaded region of FIG. 9. In particular, the average cavity dispersion $D_{avg}$ is defined as follows:

$$D_{avg} = \frac{D_g L_g + D_{un} L_{un}}{L_g + L_{un}},$$

where Dg and $D_{un}$ are the dispersion values of the gain fiber and un-doped fiber, respectively, and $L_g$ and $L_{un}$ are the associated total physical lengths of these sections of fiber. This condition is indicated by the dotted lines in FIG. 9. With too low or too high a value of Dg, this line will not cross the desired unshaded region of operation.

From the above results on modelocked cavities, it is clear that the average cavity dispersion should be slightly anomalous, in the region of, for example, +1 to +10 ps/nm-km.

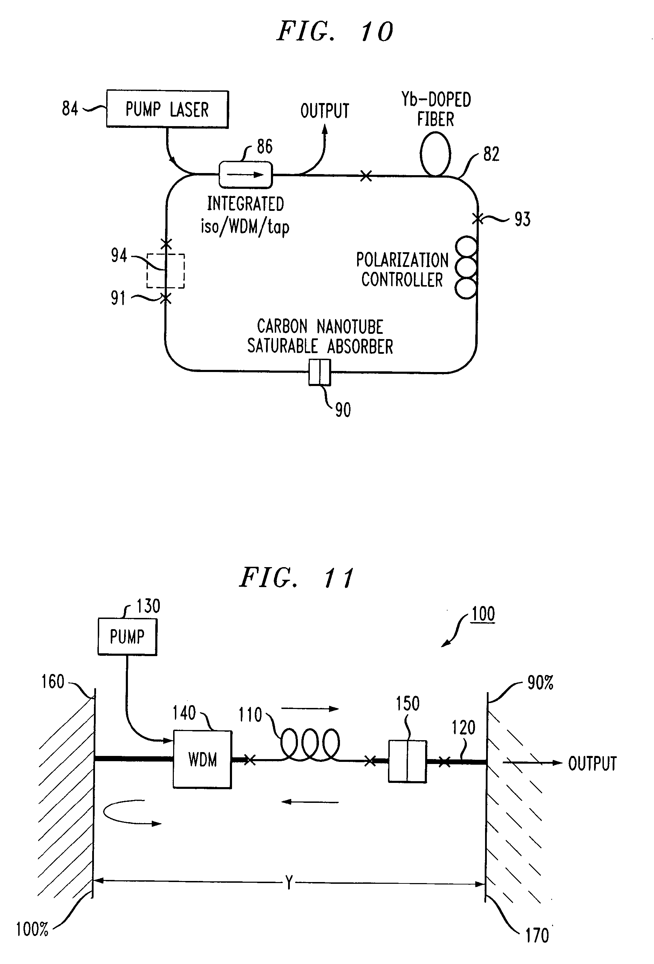

As mentioned above, it is possible to use dopants other than erbium to create the fiber ring laser of the present invention. FIG. 10 illustrates a specific embodiment where ytterbium (Yb)-doped fiber 82 is used as the gain medium (hereinafter referred to as "Yb-doped gain fiber 82"). A pump source 84 is used to introduce a pump signal into Yb-doped gain fiber 82 through a multi-functional component 86. By virtue of the ytterbium doping, the operating wavelength range for lasing output will be 1030 - 1100 nm, and the input pump signal can have a wavelength of either 915 nm or 975 nm. As with the other arrangements discussed above, sections of un-doped optical fiber 88 are used to form remaining elements of the fiber ring structure. Referring to FIG. 10, a SWNT absorber 90 is connected along a section of un-doped optical fiber 88 (splices 91 and 93 illustrating the connection locations) and a polarization controller 92 is disposed along a separate portion of un-doped optical fiber 88.

Both Yb-doped gain fiber 82 and un-doped optical fiber 88 will exhibit normal dispersion along this operating wavelength range. Thus, in order to provide desired anomalous dispersion for output sub-picosecond pulse widths, an additional element will be required (shown as element 94) which exhibits a level of anomalous dispersion sufficient to compensate for the otherwise normal dispersion. For example, elements such as a section of higher-order mode (HOM) fiber, photonic crystal fiber or photonic bandgap fiber are known to exhibit anomalous dispersion in the 1 μm wavelength range. Depending on the particular component that is used, a wide range of anomalous dispersion values are available. For example, HOM fiber can be configured to exhibit dispersion values as high as about 50 ps/nm-km, whereas photonic bandgap fibers can be formed with dispersion values of approximately 800 ps/nm-km, or even much higher.

While various implementations of the present invention may be in the form of a ring laser, there are situations where a linear laser arrangement is preferred. FIG. 11 illustrates an exemplary linear fiber laser 100 formed in accordance with the present to utilize a fiber-integrated SWNT absorber to create passive modelocking. As shown, fiber laser 100 comprises a section of rare earth-doped fiber 110 ("gain fiber 110") spliced to a length of un-doped optical fiber 120. An incoming optical pump signal is supplied by a pump source 130 and is coupled into un-doped fiber 120 through a WDM 140. In accordance with the present invention, a SWNT absorber 150 is disposed along the optical signal path and in this case is coupled to a portion of un-doped fiber 120. As with the embodiments discussed above, SWNT absorber 150 is a fiber-based component which is directly fused to endface portions of SMF 120.

Linear fiber laser 100 is further defined by a cavity of length Y bounded between a first reflective endface 160 and an opposing, second reflective endface 170. First endface 160 is formed to be essentially 100% reflective so as to redirect the propagating signal back through WDM 140 to be re-amplified by gain fiber 110. Second endface 170 is formed to be somewhat less than 100% reflective (e.g., 90%), so as to allow for a portion of the amplified output signal to exit laser 100 while redirecting the remaining portion back into the laser cavity. As with the ring configurations discussed above, the desired anomalous dispersion characteristic required for sub-picosecond pulse widths is provided by controlling the lengths of gain fiber 110 and un-doped fiber 120 and/or the dopant choice and concentration within gain fiber 110.

In summary, a fiber laser formed in accordance with the present invention has been configured to include a fiber-integrated SWNT absorber and a multi-functional component, used in conjunction with rare earth-doped gain fiber and an un-doped fiber, preferably a single mode un-doped fiber.

Various other modifications of this invention will occur to those skilled in the art. All deviations from the specific teachings and embodiments of this specification that rely on the principles and their equivalents through which the art has advanced are considered to fall within the scope of the invention as described and claimed.

**Claims**

1. A passively modelocked optical fiber laser comprising
   a section of doped fiber having a length $L_g$ and a known dispersion Dg at a selected operating wavelength;
   a section of un-doped fiber having a length $L_{un}$ and a known dispersion $D_{un}$ at the operating wavelength, the section of un-doped fiber coupled to the section of doped fiber to form a laser cavity, the lengths and dispersions of the sections of doped and un-doped fiber selected to create a net anomalous dispersion for the fiber laser of no greater than about +20 ps/nm-km, achieving output pulses with a sub-picosecond pulse width and repetition frequency over about 100 MHz;
   an input coupler for introducing an optical pump signal into the laser cavity, the optical pump signal operating at a pump wavelength for achieving lasing in the section of doped fiber at the selected operating wavelength and a creating a lasing output signal;
   a fiber-integrated single-walled carbon nanotube saturable absorber coupled along the laser cavity creating passive modelocking; and
   an output coupler for removing a portion of the lasing output signal from the fiber laser.

**2.** A passively modelocked optical fiber laser as defined in claim 1 where the fiber laser comprises a fiber ring laser.

**3.** A passively modelocked optical fiber laser as defined in claim 2 wherein the fiber ring laser further comprises an optical isolator disposed along the ring configuration to prevent counter-propagating reflected signals from re-entering the section of doped fiber.

**4.** A passively modelocked optical fiber ring laser as defined in claim 3 wherein the optical isolator is integrated within the input coupler to form a single, multi-function component.

**5.** A passively modelocked optical fiber ring laser as defined in claim 2 wherein the laser further comprises a polarization controller disposed along the ring configuration to maintain the polarization mode of the circulating lasing output signal.

**6.** A passively modelocked optical fiber ring laser as defined in claim 3 wherein the ring laser achieves sub-picosecond pulse and repetition frequencies greater than 100 MHz, the ring laser configured to include a multi-function component incorporating functions of the input coupler, the output coupler and the optical isolator.

**7.** A passively modelocked optical fiber laser as defined in claim 1 wherein the lengths of the section of doped fiber gain medium and the section of un-doped fiber are selected to create a non-negative average dispersion value less than about 12 ps/nm-km for an operating wavelength of approximately 1550 nm.

**8.** A passively modelocked optical fiber laser as defined in claim 1 where the combination of dispersions for the lengths of the section of doped fiber and the un-doped fiber is within the range of about +1 to about +10 ps/nm-km.

**9.** A passively modelocked optical fiber laser as defined in claim 1 where the section doped fiber and the section of un-doped fiber, the input and output couplers, and the fiber-integrated single-walled carbon nanotube saturable absorber are all formed as polarization maintaining components.

FIG. 1

FIG. 2

FIG. 3

## FIG. 4

## FIG. 5

FIG. 6

FIG. 7

# FIG. 8

975 nm

PUMP LASER

OUTPUT

ERBIUM-DOPED PM FIBER

70

76

(POLARIZATION MAINTAINING) INTEGRATED iso/WDM/tap

(POLARIZATION MAINTAINING) CARBON NANOTUBE SATURABLE ABSORBER

72

POLARIZATION MAINTAINING FIBER
78

80

# FIG. 9

$$D_{avg} = (D_g * L_g + D_{un} * L_{un})/L_{tot}$$
$$D_{avg} > 0$$
$$D_{avg} > D_{max}$$
$$D_{avg} < 0$$

$D_{avg} < D_{max}$

$L_{g,min}$ MINIMUM GAIN FIBER LENGTH IS REQUIRED TO ACHIEVE SUFFICIENT SATURATION TO OPERATE AT LONG WAVELENGTHS

UN-DOPED FIBER LENGTH

INCREASING $D_g$

GAIN FIBER LENGTH

SUM OF LENGTH OF UN-DOPED FIBER AND LENGTH OF GAIN FIBER MUST BE MINIMIZED FOR HIGH REPETITION FREQUENCY OPERATION

$D_{avg} < 0$

$L_{un,min}$ MINIMUM CONNECTION LENGTH IS DETERMINED BY NUMBER OF COMPONENTS AND PRACTICAL SPLICE LIMITATIONS

## FIG. 10

## FIG. 11

**EUROPEAN SEARCH REPORT**

Application Number

EP 09 01 2100

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NICHOLSON J W ET AL: "Optically driven deposition of single-walled carbon-nanotube saturable absorbers on optical fiber end-faces" OPTICS EXPRESS, OSA (OPTICAL SOCIETY OF AMERICA), WASHINGTON DC, (US), vol. 15, no. 15, 23 July 2007 (2007-07-23), pages 9176-9183, XP002463684 ISSN: 1094-4087 | 1-3,5, 7-9 | INV. H01S3/067 H01S3/11 |
| Y | * page 9178, paragraph 3; figures 5-7 * * page 9181, paragraph 3 - page 9183, paragraph 1 * ----- | 4,6-8 | |
| X | TAUSENEV A ET AL: "177fs erbium-doped fiber laser mode locked with a cellulose polymer film containing single-wall carbon nanotubes" APPLIED PHYSICS LETTERS, AIP, AMERICAN INSTITUTE OF PHYSICS, MELVILLE, NY, US, vol. 92, no. 17, 2 May 2008 (2008-05-02), pages 171113-1-171113-3, XP012106661 ISSN: 0003-6951 | 1-3,5, 7-9 | |
| Y | * pages 171113-2, paragraph 5 - pages 171113-3, paragraph 1; figures 3,4 * ----- | 4,6-8 | **TECHNICAL FIELDS SEARCHED (IPC)** H01S |
| Y | DE 10 2007 004912 A1 (ADVANTEST CORP [JP]; UNIV TOHOKU NAT UNIV CORP [JP]) 2 August 2007 (2007-08-02) * paragraphs [0033] - [0039], [0049] - [0053], [0069] - [0072]; figures 1,4,10 * ----- | 4,6 | |
| Y | US 5 363 386 A (SMITH KEVIN [GB]) 8 November 1994 (1994-11-08) * column 2, line 64 - column 4, line 26; figures 1,2 * * column 5, line 9 - column 6, line 13 * ----- | 7,8 | |

The present search report has been drawn up for all claims

| Place of search | Date of completion of the search | Examiner |
|---|---|---|
| Munich | 11 December 2009 | Laenen, Robert |

**ANNEX TO THE EUROPEAN SEARCH REPORT
ON EUROPEAN PATENT APPLICATION NO.**                EP 09 01 2100

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2009

| Patent document cited in search report | Publication date | Patent family member(s) | | Publication date |
|---|---|---|---|---|
| DE 102007004912 A1 | 02-08-2007 | JP | 2007227903 A | 06-09-2007 |
| | | US | 2007242346 A1 | 18-10-2007 |
| US 5363386 A | 08-11-1994 | AU | 647124 B2 | 17-03-1994 |
| | | AU | 7765091 A | 27-11-1991 |
| | | CA | 2081664 A1 | 03-11-1991 |
| | | DE | 69115033 D1 | 11-01-1996 |
| | | DE | 69115033 T2 | 18-04-1996 |
| | | EP | 0527158 A1 | 17-02-1993 |
| | | ES | 2081475 T3 | 01-03-1996 |
| | | WO | 9117593 A1 | 14-11-1991 |
| | | HK | 142796 A | 09-08-1996 |
| | | IE | 911481 A1 | 06-11-1991 |
| | | JP | 5506964 T | 07-10-1993 |
| | | KR | 100225281 B1 | 15-10-1999 |
| | | NZ | 238031 A | 27-09-1993 |
| | | PT | 97551 A | 31-05-1993 |

EPO FORM P0459

For more details about this annex : see Official Journal of the European Patent Office, No. 12/82

**EP 2 169 785 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61099978 B